# NEUE EUROPÄISCHE PATENTSCHRIFT

(11) **EP 2 365 643 B3**
(45) Veröffentlichungstag dieser Patentschrift: **11.01.2017**
(45) Hinweis auf die Patenterteilung: 31.10.2012
(21) Anmeldenummer: 10002645.9
(22) Anmeldetag: 12.03.2010
(51) Int. Cl.: H04B 1/74

(54) **Funkstation-System für ein Drahtlosnetzwerk**
Radio station system for a wireless network
Système de station radio pour un réseau sans fil

(43) Veröffentlichungstag der Anmeldung: 14.09.2011
(73) Patentinhaber: Siemens Aktiengesellschaft, 80333 München (DE)
(72) Erfinder: Akil, Yahya, 76185 Karlsruhe (DE); Benjamins, Kai, 76185 Karlsruhe (DE); Keller, Stefan, 76133 Karlsruhe (DE); Müller, Jörg, 76351 Linkenheim (DE); Wolf, Manfred, 92249 Vilseck (DE)

(56) Entgegenhaltungen:
- US-A1- 2006 221 993

## Beschreibung

Die vorliegende Erfindung betrifft ein Funkstation-System für ein Drahtlos-Netzwerk, insbesondere für ein Automatisierungs-, Echtzeit - und/oder Industrie-Drahtlos-Netzwerk, mit mindestens zwei Zugangs-Netzknoten, wobei ein erster der mindestens zwei Zugangs-Netzknoten dem Funkstation--System als Zugangs-Netzknoten im Drahtlos-Netzwerk zugeordnet ist und das Funkstati-on-System mit dem ersten Zugangs-Netzknoten über eine aktive Funkverbindung zur Übermittlung von Nutzdaten verbunden ist.

Derartige Funkstation-Systeme sind aus dem Stand der Technik bekannt. So offenbart beispielsweise die US-Veröffentlichungsschrift US 2006/0221993 A1 ein WLAN-Netzwerk mit mehreren als "Access-Points" bezeichneten Zugang-Netzknoten und einer Vielzahl von Funkstationen im Funkbereich der Access-Points. Aus einer Mehrzahl verfügbarer Frequenzen wählt dabei ein Access-Point eine freie Frequenz aus, auf welcher er dann mit dem in seinem Funkbereich liegenden Funkstationen kommuniziert. Um Interferenzen zwischen den verschiedenen Access-Points im Netzwerk zu vermeiden, kommunizieren die verschiedenen Access-Points mit ihren jeweils zugeordneten Funkstationen auf verschiedenen WLAN-Kanälen, die verschiedenen Funkfrequenzen zugeordnet sind. Um einen geeigneten Access-Point als Zugangs-Netzknoten zu finden, fragen die Funkstationen im Drahtlos-Netzwerk regelmäßig die verschiedenen WLAN-Kanäle, d. h. die verschiedenen WLAN-Frequenzen ab, um über die empfangenen Signale herauszufinden, wo ein geeigneter Zugangs-Netzknoten sitzt oder ob ein besserer Zugangs-Netzknoten als der aktuell zugeordnete Zugangs-Netzknoten im Drahtlos-Netzwerk verbunden ist vorhanden ist.

Ist ein solcher besserer Zugangs-Netzknoten gefunden, so beginnt die Funkstation eine Prozedur zur Etablierung einer Funkverbindung, ggf. unter zusätzliche Vornahme einer Authentifizierungs-Prozedur z. B. gemäß dem Standard IEEE 802.11i.

Es ist ein Nachteil des Standes der Technik, dass die vorstehend genannte Zeitdauer zur Etablierung einer Funkverbindung, insbesondere, wenn ein Authentifizierungs-Schritt involviert ist, relativ lange Zeit in Anspruch nimmt. Dies kann insbesondere dann problematisch werden, wenn der Aufbau einer Funkverbindung zu einem neuen Access-Point durch das Abreißen der alten Funkverbindung, beispielsweise durch eine Bewegung der Funkstation notwendig wird, und während des Aufbaus der neuen Verbindung überhaupt keine Nutzdaten übertragen werden können.

Aus EP 1 871 039 A1 ist eine Datenübertragungseinrichtung bekannt, die ein Netzwerk und eine mobile Datenübertragungseinheit besitzt. Das Netzwerk besitzt mindestens zwei Zügriffspunkte zur kabellosen Verbindung mit der Datenübertragungseinheit. Um ein unterbrechungsfreies Umschalten vom ersten auf den zweiten Zugriffspunkt zu ermöglichten, ist vorgesehen, dass die Datenübertragungseinheit mindestens zwei Module zur Übertragung von Daten besitzt und dass die Datenübertragungseinheit eine Umschalteinrichtung zum Umschalten zwischen den Modulen besitzt, die so ausgebildet ist, dass in jedem Schaltzustand der Umschalteinrichtung nur über eines der Module Nutzdaten übertragen werden können.

Darüber hinaus ist in EP 2 063 672 A1 ein Netzwerk beschrieben, das mindestens einen Server besitzt, wobei eine mobile Datenübertragungseinheit mindestens einen Client besitzt. Das Netzwerk besitzt mindestens zwei Zugriffspunkte, während die Datenübertragungseinheit mindestens zwei Module zur kabellosen Verbindung des Netzwerks mit der mobilen Datenübertragungseinheit besitzt. Es ist eine Umschalteinrichtung vorgesehen, die die Module in einen aktiven oder passiven Zustand schalten dann. Dabei ist in jedem Schaltzustand nur ein Modul aktiv, so dass nur über ein Modul Nutzdaten übertragen werden können. Um den Umschaltvorgang zwischen den Modulen schnell und ohne Änderungen an dem Netzwerk zu ermöglichen, ist vorgesehen, dass ein in den aktiven Zustand geschaltetes Modul unmittelbar nach dem Umschalten mindestens eine Aktualisierungsmitteilung versendet, die dieses Modul als Versender bzw. Empfänger von Nutzdaten von mindestens einem Client ausgibt.

Es ist daher Aufgabe der vorliegenden Erfindung, eine schnellere Übergabe von einer bestehenden Funkverbindung in einem Drahtlos-Netzwerk zu einer neu aufgebauten Verbindung zu erreichen.

Diese Aufgabe wird gelöst von einem Funkstation-System gemäß dem Patentanspruch 1.

Dadurch, dass bereits während die erste Funkstation des Funkstation-Systems eine aktive Funkverbindung zum Austausch der von dem Funkstation-System zu übertragenden Nutzdaten betreibt, die zweite Funkstation des Funkstation-Systems die für das Funkstation-System verfügbaren Zugangs-Netzknoten im Drahtlos-Netzwerk sucht und ermittelt und dabei nicht durch eine parallel bestehende Funkverbindung zum Austausch von Nutzdaten belastet wird, ist es möglich, bereits parallel zur bestehenden Nutzdaten-Verbindung weitere Zugangs-Netzknoten aufzufinden und möglicherweise eine Kommunikation zu diesen zu starten. Auf diese Weise kann das Funkstation-System bereits einen möglichen Wechsel zu einem weiteren Zugangs-Netzknoten vorbereiten und dann einen entsprechenden Wechsel falls erforderlich schneller bewerkstelligen.

Das Drahtlos-Netzwerk kann beispielsweise als WLAN-Netz z. B. gemäß dem Standard IEEE 802.11, als WiMAX-Netzwerk, z. B. gemäß dem Standard IEEE 802.16 und/oder als vergleichbares Drahtlos-Netzwerken ausgebildet sein. Weiterhin kann das Drahtlos-Netzwerk auch als drahtlosen Feldbus-System, beispielsweise gemäß dem "Wireless-HART"-Standard ausgebildet sein. Das Drahtlos-Netzwerk kann auch als Drahtlos-Kommunikations-System beispielsweise gemäß dem GSM-, dem UMTS- öder dem GPRS-Standard oder ähnlichen Standards ausgebildet sein.

Ein Zugangs-Netzknoten kann beispielsweise im Falle eines WLAN-Netzes als so genannter "WLAN-Access-Point" ausgebildet sein oder im Falle eines Kömmünikationsnetzes beispielsweise als Basisstation. Ein Zugangs-Netzknoten umfasst zumindest unter anderem die Funktion, dass er als Kommunikationspartner für eine im Drähtlos-Netzwerk befindliche Funkstation dient bzw. dienen kann, wobei die Funkstation dann z.B. Nutzdaten über den Zugangs-Netzknoten an einen entsprechend vorgesehenen Kommunikätionspartner, z. B. innerhalb des Drahtlos-Netzwerkes oder auch außerhalb des Drahtlos-Netzwerkes, versenden kann bzw. versendet.

Das Funkstation-System oder eine Funkstation .kann beispielsweise bei einem WLAN-Netzwerk als so genannter "WLAN-Client" oder allgemein als damit vergleichbare Einrichtung ausgebildet sein. Allgemein kann jede Sende/Empfangs-Einrichtung, die zur Kommunikation mit den Zugangs-Netzknoten eingerichtet und ausgebildet ist, als Funkstation-System oder Funkstation betrachtet werden. Funkstationen bzw. das Funkstation-System weisen im Allgemeinen mindestens eine Sende/Empfangs-Einheit zum Senden von Daten an einen Empfänger und/oder Empfangen von Daten von einem Sender auf.

Das Funkstation-System kann mit dem ersten Zugangs-Netzknoten über eine aktive Funkverbindung zur Übermittlung von Nutzdaten oder auch zum Austausch von Nutzdaten verbunden sein. Weiterhin können über die aktive Funkverbindung auch z. B. Kontrolldaten, beispielsweise zur Etablierung und Kontrolle der aktiven Funkverbindung, zur Authentifizierung, und/oder auch für andere Informations- und Einstellungszwecke übertragen bzw. ausgetauscht werden.

Als Nutzdaten werden in diesem Zusammenhang die eigentlich über das Drahtlos-Netzwerk von einem ersten Kömmunikationspartner an einen zweiten Kommunikationspartner zu übertragenden Daten sein. Solche Nutzdaten können beispielsweise allgemeine Informationsdaten, Audio-, Bild- und/oder Videodaten, Textdaten, Messdaten, Einstellungsdaten, Steuerungsdaten und/oder ähnliche Daten sein. Keine Nutzdaten sind beispielsweise die zwischen der Funkstation bzw. dem Funkstation-System und einem Zugangs-Netzknoten ausgetauschten Kommunikations-Kontrolldaten zur Einstellung bzw. Etablierung der Kommunikationsverbindung, bei welchem eine der anderen Einheit beispielsweise mitteilt, auf welcher Frequenz bzw. auf welchem Kanal bestimmte Datenübertragungen erfolgten und Ähnliches. Solche Daten werden in der vorliegenden Beschreibung beispielsweise als Funk-Kommunikations-Kontroll-Daten bezeichnet.

Die Kommunikätions-Schnittstelle zur Verbindung der ersten mit der zweiten Funkstation kann beispielsweise eine Ethernet-Schnittstelle sein oder auch jede weitere drahtlose oder drahtgebundene, parallele oder serielle Schnittstelle, beispielsweise auch eine Punkt-zu-Punkt-Verbindung.

Dass das Funkstation-System bzw. die zweite Funkstation zumindest zeitweise verfügbare Zugangs-Netzknoten im Drahtlos-Netzwerk ermittelt, bedeutet beispielsweise, dass die zweite Funkstation regelmäßig und/oder nach einem vorgegebenden oder vorgebbaren Zeitmuster solche Zügangs-Netzknoten-Suchen durchführt. Dabei kann die zweite Funkstation beispielsweise alle im Drahtlos-Netzwerk verfügbaren Kommunikations-Kanäle auf mögliche Signale von einem Zugangs-Netzknoten überprüfen und auf ihren Absender hin auswerten. Beispielsweise nach einem Überprüfen eines Teils der möglichen Funkkanäle oder auch nur eines für eine Auswahl verfügbarer Zugangs-Netzknoten besonders geeigneten Funkkanals, oder auch aller mögliche Funk-Kanäle kann die zweite Funkstation dann die dadurch ermittelten verfügbaren Zugangs-Netzknoten, ggf. beispielsweise mit einer Empfangs-Qualität der vom jeweiligen Zugangs-Netzknoten empfangenen Nachrichten, zusammenstellen.

Die zweite Funkstation des erfindungsgemäßen Funkstation-Systems ist zur Bestimmung eines bevorzugten Zugangs-Netzknoten aus den ermittelten verfügbaren Zugangs-Netzknoten und zum Aufbau einer Bereitschafts-Verbindung mit dem bevorzugten Zugangs-Netzknoten ausgebildet. Dabei ist die Bereitschafts-Funkverbindung derart eingerichtet, dass zumindest während des Bestehens der aktiven Funkverbindung zwischen der ersten Funkstation und dem ersten Zugangs-Netzknoten über die Bereitschafts-Funkverbindung keine Nutzdaten ausgetauscht werden. Dies bedeutet, dass die Übertragung von Nutzdaten vom Funkstation-System zu Zugangs-Netzknoten im Drahtlös-Netzerk beim Bestehen der Bereitschafts-Verbindung nur über die aktive Funkverbindung der ersten Funkstation mit dem ersten Zugangs-Netzknoten erfolgt. Funk-Kommunikations-Kontroll-Daten gemäß der vorliegenden Beschreibung werden aber auch über die Bereitschafts-Funkverbindung übertragen, beispielsweise zur Einstellung und/oder Kontrolle der Bereitschaft-Funkverbindung.

Diese Ausgestaltung hat den Vorteil, dass während des Bestehens der aktiven Funkverbindung zur Nutzdatenübertragung, parallel durch die zweite Funkstation bereits die ganzen Vorgänge zur Etablierung einer Funkverbindung mit dem bevorzugten Zugangs-Netzknoten vorgenommen werden können. Dann muss, wenn Bedarf für eine Umschaltung der Verbindung (z. B. bei einem so genannten "Handover" zum bevorzugten Zugangs-Netzknoten besteht, der neue Kanal nicht mehr zeitaufwändig aufgebaut werden, sondern es kann die etabliert Bereitschafts-Verbindung benutzt werden. Damit lässt sich ein erheblich schnelleres Umschalten des Funkstation-Systems zu einem anderen Zugangs-Netzknoten erreichen.

Der bevorzugte Zugangs-Netzknoten kann dabei ein sich vom ersten Zugangs-Netzknoten unterscheidender weiterer Zugang-Netzknoten im Drahtlos-Netzwerk sein. Der bevorzugte Zugangs-Netzknoten kann aber auch der erste Zugangs-Netzknoten sein. In diesem Fall kann vorgesehen sein, dass die zweite Funkstation des Funkstation-Systems eine Bereitschafts-Verbindung auch zum ersten Zugangs-Netzknoten ausbildet. Insbesondere bei bewegten Funkstation-Systemen, z.B. auf einem Fahrzeug, bei welchen beispielsweise die erste und zweite Funkstation beabstandet und/oder mit verschiedenen Antennen-Charakteristiken versehen sind, kann der Fall auftreten, dass die aktive Funkverbindung zwischen der ersten Funkstation und dem ersten Zugangs-Netzknoten schlechter wird oder sogar abreißt, während eine Funkverbindung zwischen dem ersten Zugangs-Netzknoten und der zweiten Funkstation des Funkstation-Systems immer noch möglich ist.

Die Bestimmung des bevorzugten Zugangs-Netzknotens kann beispielsweise durch Vergleich der Eingangs-Intensitäten oder Eingangs-Feldstärken der von den verschiedenen Zugangs-Netzknoten kommenden Nächrichtensignale erfolgen, eventuell auch unter Hinzuziehung anderer Kriterien wie Protokollstandards oder Sicherheitsstandards der jeweiligen Zugangs-Netzknoten. Dabei kann die Bestimmung des bevorzugten Zugangs-Netzknoten beispielsweise derart ausgestaltet sein, dass dabei der zum jeweiligen Bestimmüngszeitpunkt geeignete Zugangs-Netzknoten für das Funkstation-System ermittelt wird. Auch während des Bestehens einer Bereitschäfts-Funkverbindung kann die zweite Funkstation weiterhin verfügbare Zugangs-Netzknoten im Drahtlos-Netzwerk, beispielsweise gemäß Patentanspruch 1, ermitteln. Sollte sie dabei einen noch geeigneteren Zugangs-Netzknoten ermitteln, kann zu diesem eine zusätzliche Bereitschafts-Funkverbindung aufgebaut und die bestehende Bereitschafts--Funkverbindung dann wieder aufgegeben werden. Auf diese Weise lassen sich auch Veränderungen im Drahtlos-Netzwerk, beispielsweise durch eine Bewegung des Funkstation-Systems oder Inbetriebnahme oder Änderung weiterer Zugangs-Netzknoten jederzeit dynamisch berücksichtigen.

Die zweite Funkstation weist erfindungsgemäß weiterhin Mittel zum Vergleich einer Qualität der aktiven Funkverbindung mit einer Qualität der Bereitschafts-Funkverbindung auf. Über einen solchen Vergleich ist es beispielsweise möglich, zu bewerten, ob es anstelle der bestehenden, aktiven Funkverbindung des Funkstation-Systems eine bessere Verbindungsmöglichkeit des Funkstation-Systems in das Drahtlos-Netzwerk hinein besteht.

Dabei kann die Qualität der jeweiligen Funkverbindung beispielsweise anhand einer Signalstärke oder Signalintensität der von dem Zugangs-Netzknoten empfangenen Nachrichtensignale bestimmt werden. Weiterhin können auch andere Kriterien, wie beispielsweise ein Zeit-Jitter oder eine Rauschstärke berücksichtigt werden.

Die zweite Funkstation weist erfindungsgemäß auch Mittel zur Auswahl einer bevorzugten Funkverbindung aus der aktiven Funkverbindung und der Bereitschafts-Funkverbindung auf. Über solche Mittel kann das Funkstation-System dann eine Entscheidung fällen, welcher der Kanäle für die Nutzdatenübertragung am geeignetsten ist.

Eine solche Auswahl der bevorzugten Funkverbindung kann beispielsweise anhand der vorstehend genannten Qualitäten der jeweiligen Funkverbindung, unter Umständen unter Heranziehung weiterer Kriterien wie unterstützte Protokolle, Echtzeitfähigkeit oder Sicherheitsstandards der jeweiligen Zugangs-Netzknoten erfolgen. Weiterhin kann die Auswahl auch anhand anderer Kriterien, wie beispielsweise einer Bediener-Einstellung erfolgen.

In einer vorteilhaften Ausgestaltung kann das Funkstation-System derart ausgebildet und eingerichtet sein, dass die Bereitschafts-Funkverbindung in eine weitere aktive Funkverbindung zur Übermittlung der Nutzdaten von der zweiten Funkstation zu den bevorzugten Zugangs-Netzknoten umgewandelt wird. Dabei wird dann auch die aktive Funkverbindung zwischen der ersten Funkstation und dem ersten Zugangs-Netzknoten dann beendet oder in eine weitere Bereitschafts-Funkverbindung umgewandelt werden, so dass nach diesem Vorgang die über das Funkstation-System an einen Zugangs-Netzknoten im Drahtlos-Netzwerk übertragene Nutzdaten nur noch über die weitere aktive Funkverbindung übermittelt werden.

Die weitere Bereitschafts-Funkverbindung und/oder die vorstehend genannte zusätzliche Bereitschafts-Funkverbindung können z.B. entsprechend einer Bereitschafts-Funkverbindung gemäß der vorliegenden Beschreibung ausgebildet sein. Insbesondere werden über die weitere Bereitschafts-Funkverbindung und/oder die zusätzliche Bereitschafts-Funkverbindung keine Nutzdaten gemäß der vorliegenden Beschreibung ausgetauscht. Gleichwohl können z.B. Funk-Kommunikations-Kontroll-Daten und/oder Authentifizierungs-Daten über diese Bereitschafts-Funkverbindungen gesendet bzw. ausgetauscht werden.

Ein solcher vorstehend dargestellter Umschaltvorgang kann beispielsweise erfolgen, wenn die Qualität der Bereitschafts-Funkverbindung die Qualität der aktiven Funkverbindung übersteigt und/oder die bevorzugte Funkverbindung der Bereitschafts-Funkverbindung entspricht. Die beiden genannten Kriterien können beispielsweise Kriterien bzw. Indizien dafür sein, dass die bevorzugte Funkverbindung die für das Funkstation-System gegenüber der aktiven Funkverbindung geeignetere Verbindung zur Übertragung der Nutzdaten ist.

Eine solche Umschaltung des Funkstation-Systems von der aktiven Funkverbindung auf die weitere aktive Funkverbindung kann beispielsweise auch dann erfolgen, wenn die Qualität der Bereitschaftsfunkverbindung die Qualität der aktiven Funkverbindung für einen gewissen Zeitraum überstiegen hat. Auf diese Weise kann besser sichergestellt sein, dass es sich nicht nur um einen kurzfristigen Qualitätsvorteil, sondern über einen längerfristigen Qualitätsvorteil handelt, so dass sich die vorstehend genannte Umschaltung und der entsprechende Aufwand dafür auch lohnt.

Ein derart ausgestaltetes Funkstation-System ermöglicht eine deutlich schnellere Umschaltung einer Nutzdatenverbindung von der aktiven Funkverbindung der ersten Funkstation zum ersten Zugangs-Netzknoten auf die weitere aktive Funkverbindung von der zweiten Funkstation zum bevorzugten Zugangs-Netzknoten. Dadurch, dass bereits vor der Umschaltung die Bereitschafts-Funkverbindung zwischen der zweiten Funkstation des Funkstation-System und den bevorzugten Zugangs-Netzknoten bestand, muss zum Umschalten nicht mehr der zeitaufwändige Vorgang des Aufbauens des Kanals und ggf. einer Authentifizierung vorgenommen werden, sondern es kann die bereits etablierte Bereitschafts-Funkverbindung verwendet werden. Auf diese Weise lässt sich ein so genannter "Handover" zum bevorzugten Zugangs-Netzknoten sehr rasch erreichen.

Die erste Funkstation kann weiterhin derart ausgestaltet und eingerichtet sein, dass nach einem solchen Umschalten der Funkverbindungen, bzw. "Handover" des Funkstation-Systems, die erste Funkstation zumindest zeitweise und/oder regelmäßig für das Funkstation-System verfügbare Zugangs--Netzknoten im Drahtlos-Netzwerk ermittelt.

Weiterhin kann die erste Funkstation derart ausgebildet sein, dass nach einer solchen Umschaltung keine Nutzdaten mehr über Funkverbindungen der ersten Funkstation übertragen werden. Erfindungsgemäß ist die erste Funkstation entsprechend der zweiten Funkstation bzw. die zweite Funkstation entsprechend der ersten Funkstation ausgebildet, insbesondere gemäß der vorliegenden Beschreibung.

Auf diese Weise kann beispielsweise ein Funkstation-System gebildet werden, bei welchem die erste und zweite Funkstation nach einem Handover gemäß der vorstehenden Beschreibung ihre ürsprünglichen Rollen getauscht haben. Damit weist das Funkstation-System dann auch weiterhin die Vorteile des ursprüngliche Funkstation-Systems zum Übertragen von Nutzdaten und dem parallelen Handling einer Bereitschafts-Verbindung auf.

Die Antennen der ersten und zweiten Funkstation können beispielsweise beabstandet sein und/oder eine verschiedene Abstrahlungs-Charakteristik aufweisen. Eine Beabstandung der Funkstationen kann beispielsweise 1 Meter, 10 Meter, 50 Meter oder auch 100 Meter sein.

Mit dieser Ausgestaltung lässt sich eine bessere Funkfeld-Abdeckung durch das Funkstation-System erreichen, da die Wahrscheinlichkeit erhöht wird, dass ein geeigneter Zugangs-Netzknoten zumindest im Empfangsbereich bzw. Empfangsradius einer der Funkstationen bzw. einer der Antennen der Funkstationen befindlich ist.

Erfindungsgemäß weisen die erste und zweite Funkstation weiterhin ein Gehäuse auf, wobei die Gehäuse der ersten und zweiten Funkstation auch beabstandet sein können. Ein Abstand kann auch hier beispielsweise 1 Meter, 10 Meter, 50 Meter oder auch 100 Meter betragen. Auf diese Weise ist das Funkstation-System quasi modular ausgebaut und kann platzsparend an besonders vorteilhaften Orten installiert werden. So können die beiden Funkstationen des Funkstation-Systems beispielsweise so in einem Raum so installiert sein, dass sie besonders vorteilhaft im Strahlungsbereich bestimmter Zugangs-Netzknoten liegen.

Weiterhin kann ein Funkstation-System gemäß der vorliegenden Beschreibung auch auf einem Fortbewegüngsmittel, beispielsweise einem Fahrzeug, einem Schliff, einem Flugzeug oder einem Zug installiert sein. Vorteilhafterweise können sich die beiden Funkstationen an verschiedenen, möglichst weit beabstandeten Punkten des Fortbewegungsmittels befinden. So können sich die erste und zweite Funkstation beispielsweise bei einem Flugzeug oder einem Zug jeweils in verschiedenen Endbereichen des Zuges bzw. des Flugzeuges befinden. Auf diese Weise kann ein besonders hoher Einzugsbereich für Funksignals von Zugangs-Netzknoten erreicht werden und es lässt sich auch bei einer relativ raschen Bewegung des Fortbewegungsmittels noch eine gute und kontinuierliche Nutzdaten-Übertragung erreichen.

Die vorliegende Erfindung wird ebenfalls gelöst von einem Verfahren zum Betrieb eines Funkstation-Systems gemäß der vorliegenden Beschreibung, wobei die zweite Funkstation während des Bestehens der aktiven Funkverbindung zwischen der ersten Funkstation und dem ersten Zugangs-Netzknoten zumindest zeitweise für das Funkstation-System verfügbare Zugangs-Netzknoten im Drahtlos-Netzwerk ermittelt. Auch hier kann das zeitweise Ermitteln beispielsweise in einem regelmäßigen Zeitabstand oder beispielsweise auch nach einem vorgegebenen oder vorgebbaren festen oder variablen Zeitmuster erfolgen. Ein solcher Ermittlungsvorgang kann z.B. auch dann erfolgten, wenn bereits eine Bereitschaft-Funkverbindung gemäß der nachfolgenden Beschreibung aufgebaut wurde. Damit lässt sich erreichen, dass auch die Bereitschafts-Funkverbindungen dynamisch an die jeweiligen Randbedingungen im Drahtlos-Netzwerk anpassen lassen.

Auch hier besteht der Vorteil, dass parallel zum Bestehen der aktiven Funkverbindung zwischen der ersten Funkstation und dem ersten Zugangs-Netzknoten, schon verfügbare Zugangs-Netzknoten ermittelt werden und so ein mögliches Umschalten der aktiven Funkverbindung auf eine weitere Funkverbindung, beispielsweise bei Abreißen oder Verschlechterung der aktiven Funkverbindung, schneller erreichbar ist.

Nach oder während des vorstehend genannten Ermittelns der verfügbaren Zugangs-Netzknoten werden in der zweiten Funkstation erfindungsgemäß ein bevorzugter Zugangs-Netzknoten aus den ermittelten verfügbaren Zugangs-Netzknoten bestimmt und eine Bereitschafts-Verbindung mit den bevorzugten Zugangs-Netzknoten aufgebaut. Dabei ist die Bereitschafts-Funkverbindung derart eingerichtet, dass zumindest während des Bestehens der aktiven Funkverbindung zwischen der ersten Funkstation und dem ersten Zugangs-Netzknoten über die Bereitschafts-Funkverbindung keine Nutzdaten ausgetauscht werden. Gleichwohl können z.B. Funk-Kommunikations-Kontroll-Daten und/oder Authentifizierungs-Daten über die Bereitschafts-Funkverbindung gesendet bzw. ausgetauscht werden.

Dabei kann die Ermittlung der verfügbaren Zugangs-Netzknoten, die Bestimmung des bevorzugten Zugangs-Netzknotens sowie der Aufbau der Bereitschafts-Verbindung beispielsweise wie in der vorliegenden Beschreibung an anderer Stelle erläutert ausgebildet sein.

Auf diese Weise lässt sich der Übergang des Funkstation-Systems von der aktiven Funkverbindung auf eine andere Funkverbindung weiter beschleunigen, da über die zweite Funkstation bereits eine Bereitschafts-Funkverbindung aufgebaut wird, während die aktive Funkverbindung noch besteht und so dieser relativ zeitaufwändige Verbindungsaufbau, insbesondere wenn eine Authentifizierung (z. B. gemäß IEEE 802.11i Standard, z. B. auch über einen sogenannte "RADIUS-Server") involviert ist, bereits während des Bestehen der aktiven. Funkverbindung vorgenommen werden kann.

Nachfolgend vergleicht die zweite Funkstation erfindungsgemäß eine Qualität der aktiven Funkverbindungen mit einer Qualität der Bereitschafts-Funkverbindung. Auch hier können die Bestimmung der Qualitäten der jeweiligen Funkverbindung sowie deren Vergleich gemäß der vorliegenden Beschreibung ausgestaltet sein.

Alternativ oder danach wählt die zweite Funkstation erfindungsgemäß eine bevorzugte Funkverbindung aus der aktiven Funkverbindung und der Bereitschafts-Funkverbindung aus. Auch diese Auswahl kann beispielsweise gemäß der vorliegenden Beschreibung ausgestaltet sein.

Nachfolgend zu den vorgenannten Schritten, bzw. einem der vorgenannten Schritte, kann weiterhin vorgesehen sein, dass die zweite Funkstation die Bereitschafts-Funkverbindung in eine weitere aktive Funkverbindung zur Übermittlung von Nutzdäten zu den bevorzugten Zugangs-Netzknoten umwandelt, wobei weiterhin die erste Funkstation die aktive Funkverbindung zu dem ersten Zugangs-Netzknoten beendet oder in eine weitere Bereitschafts-Funkverbindung gemäß der vorliegenden Beschreibung umwandelt, oder weiterhin zumindest die Nutzdatenübertragung über diese Funkverbindung beendet.

Diese Umwandlung bzw. dieser Übergang oder "hannover" kann beispielsweise dann erfolgen, wenn die Qualität der Bereitschafts-Funkverbindung die Qualität der aktiven Funkverbindung übersteigt oder über einen bestimmten, vorgegebenen oder vorgebbaren Zeitraum überstiegen hat, und/oder wenn die bevorzugte Funkverbindung der Bereitschafts-Funkverbindung entspricht.

Auch hier bedeuten die genannten Kriterien, dass ein sogenannter "Handover" von der aktiven Funkverbindung zum ersten Zugangs-Netzknoten zur weiteren aktiven Funkverbindung zum bevorzugten Zugangs-Netzknoten dann erfolgt, wenn eine Nutzdaten-Übertragung über eine umgewandelte Bereitschafts-Funkverbindung für das Funkstation-System geeigneter erscheint, als die Nutzdaten-Übertragung über die bestehende aktive Funkverbindung.

Auch dieser Übergang kann gemäß der vorliegenden Beschreibung weiter ausgestaltet sein.

Nach dem vorstehend genannten Handover kann die erste Funkstation dann zumindest zeitweise für das Funkstation-System verfügbare Zugangs-Netzknoten im Drahtlos-Netzwerk ermitteln.

Auf diese Weise haben erste und zweite Funkstation im Funkstation-System nach dem Handover quasi ihre Rollen getauscht, so dass auch nach einem Handover das Funkstation-System die gleichen vorteilhaften Eigenschaften hat wie vorher.

Nachfolgend wird die vorliegende Erfindung beispielhaft mit Bezug auf die beiliegende Figur erläutert. Es zeigt:

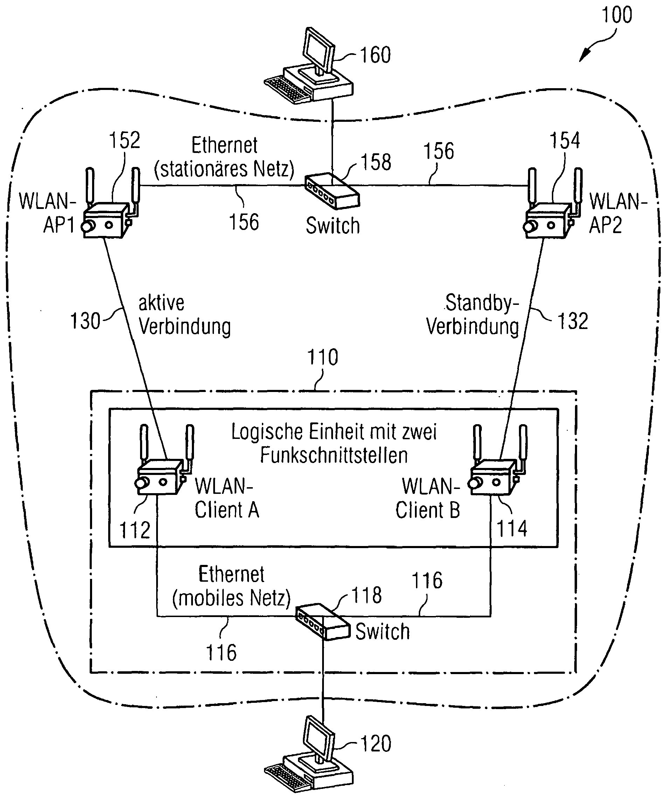

Figur 1: WLAN-Netzwerk mit Doppel-Client.

Figur 1 zeigt ein WLAN-Netzwerk 100 gemäß dem Standard IEEE 802.11 zur Übertragung von Nutzdaten von einer ersten Kommunikationsstation 120 zu einer zweiten Kommunikationsstation 160. Das WLAN-Netz 100 umfasst einen Doppel-Client 110, welcher einen ersten "WLAN-Client A" 112 und einen zweiten "WLAN-Client B" 114 umfasst, welche wiederum über Ethernet-Leitungen 116 und einen dazwischen geschalteten so genannten "Switch" 118 verbunden sind.

Weiterhin ist im WLAN-Netz 100 ein erster so genannter "Access-Point" 152 (WLAN-AP1) und ein zweiter Access-Point 154 (WLAN-AP2) vorgesehen, welche über eine Ethernet-Verbindung 156 und einem dazwischen geschalteten Switch verbunden sind. Weiterhin besteht eine aktive Funkverbindung 130 zwischen dem ersten WLAN-Client 112 und dem ersten Access-Point 152.

Im in Figur 1 dargestellten Zustand des WLAN-Netzes 100 werden Nutzdaten von der ersten Kommunikationseinrichtung 120 an den Switch 118 im Doppel-Client 110 übertragen und dann über die aktive Funkverbindung 130 vom ersten WLAN-Client 112 an den ersten WLAN-Access-Point 152 weitergeleitet, wonach sie dann über den Switch 158 im stationären Teil des Ethernets an den zweiten Kommunikationsteilnehmer 160 weitergeleitet werden.

Parallel zur aktiven Verbindung 130 zwischen dem ersten WLAN-Client 112 und dem ersten Access-Point 152 hat der zweite WLAN-Client 114 alle verfügbaren Funkkanäle im WLAN-Netz 100 abgefragt und durch eine Auswertung der vom ersten und zweiten Access-Point 152, 154 empfangenen Signale ermittelt, dass für ihn der zweite Access-Point 154 der bevorzugte Access-Point ist. Daraufhin hat der zweite WLAN-Client 114 eine Bereitschafts- oder Standby-Verbindung 132 zum zweiten Access-Point 154 aufgebaut.

In regelmäßigen Zeitabständen übermittelt nun der erste WLAN-Client 112 des Döppel-Clients 110 die Qualität der aktiven Funkverbindung 130 an den zweiten WLAN-Client 114, welcher diese mit der Qualität seiner Standby-Verbindung 132 vergleicht.

Wenn nun beispielsweise der zweite Client 114 feststellt, dass die Qualität der Standby-Verbindung 132 besser oder auch dauerhaft besser als die der aktiven Verbindung 130 ist, initiiert er einen Handover des Doppel-Clienten 110 zum zweiten Access-Point 154.

Dieser erfolgt dann in einer Weise, dass die Standby-Verbindung zu einer aktiven Verbindung zur Übertragung von Nutzdaten umgewandelt oder erweitert wird, während die aktiver Verbindung des ersten WLAN-Clients 112 zum ersten Access-Point 152 in eine weitere Standby-Verbindung umgewandelt oder sogar unterbrochen wird. Daraufhin erfolgt die Nutzdaten-Übertragung vom ersten Kommunikationspartner 120 an den zweiten Kommunikationspartner 160 dann ausschließlich über die vormalige Standby-Verbindung 132 und jetzt neue aktive Nutzdaten-Funkverbindung.

Ein solches Umschalten kann beispielsweise wie folgt ablaufen:
1. Der zweite WLAN-Client 114 entscheidet eine Umschaltung zu initiieren und informiert den ersten WLAN-Client 112;
2. der erste WLAN-Client 112 unterbricht das Weiterleiten von Nutzdatenpaketen, schaltet auf eine Standby-Verbindung und beginnt die Suche nach anderen verfügbaren WLAN-Access-Points in Reichweite;
3. der erste WLAN-Client 112 überträgt seine Weiterleitungstabelle (Bridge-FDB) an den zweiten WLAN-Client 114;
4. der zweite WLAN-Client 114 sendet eine Management-Nachricht an den zweiten Access-Point 154, zum die Standby-Verbindung 132 zu aktivierten. Diese Management-Nachricht enthält z. B. die Adressen der im mobilen Netz angeschlossenen Teilnehmer;
5. der zweite WLAN--Client 154 bestätigt dem ersten Client 114 die erfolgreiche Aktivierung der vormaligen Standby-Verbindung 132 und aktualisiert entsprechende Weiterleitungstabellen von im stationären Netz angeschlossenen Switches, wie beispielsweise dem Switch 158;
6. der zweite WLAN-Client 114 aktualisiert entsprechende Weiterleitungstabellen im Switch 118 im Doppel-Clienten 110 mithilfe der Weiterleitungstabelle, welche er vom ersten Access-Point 112 erhalten hat;
7. der zweite WLAN-Client beginnt mit der Weiterleitung von Nutzdatenpaketen an den zweiten Access-Point 144.

Über die in Figur 1 dargestellte räumliche Trennung der beiden WLAN-Clients 112, 114 des Doppel-Clients 110 wird der Vorteil erreicht, dass durch die unterschiedlichen Wirkungsbereiche der Antennen ein größeres Funkfeld abgedeckt werden kann. Damit lässt sich die potentielle Anzahl von verfügbaren WLAN-Access-Points 152, 154, die zu einem bestimmten Zeitpunkt in der Reichweite des Doppel-Clients 110 befindlich sind, erhöhen.

Das in der vorliegenden Beschreibung beschriebene Verfahren sowie die entsprechende Vorrichtungen bieten zusammengefasst beispielsweise einige, mehrere oder alle der nachstehenden Vorteile:
1. Die verfügbaren Bandbreite wird aufgrund der Trennung zwischen Nutzdatenübertragung und Suche nach verfügbaren WLAN-Access-Points besser ausgenützt;
2. Die Verbindungsqualität zu jedem Zeitpunkt wird durch einen häufigen oder permanenten Vergleich der Signalqualität zwischen einer aktiven und einer Bereitschafts-Funkverbindung verbessert;
3. Ein Handover lässt sich mit verringerter Unterbrechungszeit vornehmen, auch bei Verwendung von Aüthentifizierungsverfahren wie beispielsweise gemäß IEEE 802.11i und/oder unter Verwendung eines "RADIUS-Servers";
4. Der Wirkungsbereich des WLAN-Doppel-Clients lässt sich durch eine mögliche räumliche Trennung der WLAN-Clients im WLAN-Doppel-Client 110 vergrößern;
5. Es entsteht eine mögliche Verbindungsredundanz für den Fall eines Ausfalls eines der WLAN-Clients.

## Patentansprüche

1. Funkstation-System (110) für ein Drahtlosnetzwerk (100) mit mindestens zwei Zugangs-Netzknoten (152, 154),
wobei ein erster der mindestens zwei Zugangs-Netzknoten (152) dem Funkstation-System (110) als Zugangs-Netzknoten im Drahtlosnetzwerk (100) zugeordnet ist und das Funkstation-System (110) mit dem ersten Zugangs-Netzknoten (152) über eine aktive Funkverbindung (130) zur Übermittlung von Nutzdaten verbunden ist, und
wobei das Funkstation-System (110) eine erste Funkstation (112) umfasst, welche über die aktive Funkverbindung (130) mit dem ersten Zugangs-Netzknoten (152) zum Austausch der Nutzdaten verbunden ist, und
wobei das Funkstation-System (110) eine zweite Funkstation (114) umfasst, und
wobei die zweite Funkstation (114) zur Bestimmung eines bevorzugten Zugangs-Netzknotens (154) aus den ermittelten verfügbaren Zugangs-Netzknöten und zum Aufbau einer Bereitschafts-Verbindung (132) mit dem bevorzugten Zugangs-Netzknoten (154) ausgebildet ist, wobei die Bereitschafts-Funkverbindung (132) derart eingerichtet ist, das zumindest während des Bestehen der aktiven Funkverbindung (130) zwischen der ersten Funkstation (112) und dem ersten Zugangs-Netzknoten (152) über die Bereitschafts-Funkverbindung (132) nur Funk-Kommunikations-Kontroll-Daten ausgetauscht und zumindest zeitweise für das Funkstation-System(110) verfügbare Zugangs-Netzknoten (152, 154) im Drahtlosnetzwerk (100) ermittelt werden,
**dadurch gekennzeichnet, dass**
- die zweite Funkstation (114) mit der ersten Funkstation (112) über eine Kommunikations-Schnittstelle (116, 118) verbunden ist,
- die zweiten Funkstation (114) Mittel zum Vergleich einer Qualität der aktiven Funkverbindung (130) mit einer Qualität der Bereitschafts-Funkverbindung (132) aufweist,
- die zweite Funkstation (114) Mittel zur Auswahl einer bevorzugten Funkverbindung aus der aktiven Funkverbindung (130) und der Bereitschafts-Funkverbindung (132) aufweist,
- die erste Funkstation (112) entsprechend der zweiten Funkstation (114) ausgebildet ist,
- die erste Funkstation (112) und die zweite Funkstation (114) jeweils ein Gehäuse aufweisen.

2. Funkstation-System nach Anspruch 1,
**dadurch gekennzeichnet,**
**dass** das Funkstation-System derart ausgebildet und eingerichtet ist, dass
- die Bereitschafts-Funkverbindung (132) in eine weitere aktive Funkverbindung zur Übermittlung der Nutzdaten von der zweiten Funkstation (114) zu dem bevorzugten Zugangs-Netzknoten (154) umgewandelt wird und
- die aktive Funkverbindung (130) zwischen der ersten Funkstation (112) und dem ersten Zugangs-Netzknoten (152) beendet wird und/oder in eine weitere Bereitschafts-Funkverbindung umgewandelt wird, wenn
- die Qualität der Bereitschafts-Funkverbindung (132) die Qualität der aktiven Funkverbindung (130) übersteigt oder überstiegen hat, und/oder
- die bevorzugten Funkverbindung der Bereitschafts-Funkverbindung (132) entspricht.

3. Funkstation-System nach Anspruch 2,
**dadurch gekennzeichnet**,
das die ersten Funkstation (112) nach der Beendigung der aktiven Funkverbindung (130) und/oder der Umwandlung der aktiven Funkverbindung (130) in die weitere Bereitschafts-Funkverbindung zum, ersten Zugangs-Netzknoten (152)
- keine Nutzdaten mehr über eine Funkverbindung, mit einem Zugangs-Netzknoten (152, 154) im Drahtlosnetzwerk (100) sendet oder austauscht und weiterhin
- zumindest zeitweise für das Funkstation-System (110) verfügbare Zugangs-Netzknoten (152, 154) im Drahtlosnetzwerk ermittelt.

4. Funkstation-System nach einem der Ansprüche 1 bis 3,
**dadurch gekennzeichnet,**
**dass** zumindest der ersten und zweiten Funkstation (112, 114) zugeordnete Antennen beabstandet sind und/oder eine verschiedene Abstrahlungs-Charakteristik aufweisen.

5. Funkstation-System nach einem der Ansprüche 1 bis 4,
**dadurch gekennzeichnet,**
**dass** die Gehäuse der ersten und zweiten Funkstation (112, 114) beabstandet sind.

6. Funkstation-System nach einem der Ansprüche 1 bis 5,
**dadurch gekennzeichnet,**
**dass** die zweite Funkstation (114) mit der ersten Funkstation (112) über eine Ethernet-Schnittstelle verbunden ist.

7. Fortbewegungsmittel, insbesondere Fahrzeug, mit einem Funkstation-System (110) gemäß einem der Ansprüche 1 bis 6, wobei insbesondere die ersten und zweite Funkstation (112, 114) an verschieben Orten, am Fahrzeug angebracht sind.

8. Verfahren zum Betrieb eines Funkstation-Systems (110) gemäß einem der Ansprüche 1 bis 6, bei dem die zweite Funkstation (114) während des Bestehens der aktiven Funkverbindung (130) zwischen der ersten Funkstation (112) und dem ersten Zugangs-Netzknoten (152)
a.) zumindest zeitweise für das Funkstation-System (110) verfügbare Zugangs-Netzknoten (152, 154) im Drahtlosnetzwerk (100) ermittelt,
b.) nach oder während Verfahrensschritt a.) einen bevorzugten Zugangs-Netzknoten (154) aus den während Verfahrensschritt a.) ermittelten verfügbaren Zugangs-Netzknoten bestimmt und eine Bereitschafts-Funkverbindung (132) mit dem bevorzugten Zugangs-Netzknoten (154) aufbaut, wobei die Bereitschafts-Funkverhindung (132) derart eingerichtet ist, dass zumindest während des Bestehens der aktiven Funkverbindung (130) zwischen der ersten Funkstation (112) und dem ersten Zugangs-Netzknoten (152) über die Bereitschafts-Funkverbindung (132) keine Nutzdaten ausgetauscht werden, und wobei die erste Funkstation (112) entsprechend der zweiten Funkstation (114) ausgebildet ist,
c.) nach Verfahrensschritt b.) eine Qualität der aktiven Funkverbindung (130) mit einer Qualitat der Bereitschafts-Funkverbindung (132) vergleicht,
d.) nach Verfahrensschritt b.) oder c.) eine bevorzugte Funkverbindung aus der aktiven Funkverbindung (130) und der Bereitschafts-Funkverbindung (132) auswählt.

9. Verfahren nach Anspruch 8,
**dadurch gekennzeichnet,**
**dass** nach Verfahrensschritt c.) oder d.) e.) die zweite Funkstation (114) die Bereitschafts-Funkverbindung (132) in eine weitere aktive Funkverbindung zur Übermittlung der Nutzdaten zu dem bevorzugten Zugangs-Netzknoten (154) umwandelt und
die erste Funkstation (112) die aktive Funkverbindung zu dem ersten Zugangs-Netzknoten (152) beendet und/oder in eine weitere Bereitschafts-Funkverbindung umwandelt, wenn
- die Qualität der Bereitschafts-Funkverbindung (132) die Qualität der aktiven Funkverbindung (130) übersteigt oder überstiegen hat, und/oder
- die bevorzugte Funkverbindung der Bereitschafts-Funkverbindung (132) entspricht.

10. Verfahren nach Anspruch 9,
**dadurch gekennzeichnet,**
**dass** nach oder während Schritt e.)
f.) die erste Funkstation (112) zumindest zeitweise für das Funkstation-System (110) verfügbare Zugangs-Netzknoten (152, 154) im Drahtlosnetzwerk (100) ermittelt.

## Claims

1. Radio station system (110) for a wireless network (100) with at least two access nodes (152, 154),
wherein a first of the at least two access network nodes (152) is assigned to the radio station system (110) as an access network node in the wireless network (100) and the radio station system (110) is connected to the first access network node (152) via an active radio link (130) for the transmission of user data, and
wherein the radio station system (110) comprises a first radio station (112), which is connected to the first access network node (152) via the active radio link (130) for the exchange of the user data, and
wherein the radio station system (110) comprises a second radio station (114), and
wherein the second radio station (114) is embodied to determine a preferred access network node (154) from the identified available access network nodes and to set up a standby connection (132) with the preferred access network node (154), wherein the standby radio link (132) is set up in such a way that at least during the existence of the active radio link (130) between the first radio station (112) and the first access network node (152) only radio communication control data is exchanged via the standby radio link (132) and at least at times available access network nodes (152, 154) are identified in the wireless network for the radio station system (110)
**characterised in that**
- the second radio station (114) is connected to the first radio station (112) via a communication interface (116, 118),
- the second radio station (114) has means for the comparison of a quality of the active radio link (130) with a quality of the standby radio link (132),
- the second radio station (114) has means for the selection of a preferred radio link from the active radio link (130) and the standby radio link (132),
- the first radio station (112) is embodied corresponding to the second radio station (114),
- the first radio station (112) and the second radio station (114) in each case have a housing.

2. Radio station system according to claim 1,
**characterised in that**
the radio station system is embodied and set up in such a way that
- the standby radio link (132) is converted into a further active radio link for the transmission of the user data from the second radio station (114) to the preferred access network node (154) and
- the active radio link (130) between the first radio station (112) and the first access network node (152) is terminated and/or converted to a further standby radio link, if
- the quality of the standby radio link (132) exceeds or has exceeded the quality of the active radio link (130) and/or
- the preferred radio link corresponds to the standby radio link (132).

3. Radio station system according to claim 2,
**characterised in that**
the first radio station (112) after termination of the active radio link (130) and/or conversion of the active radio link (130) into the further standby radio link to the first access network node (152)
- transmits or exchanges no further user data via a radio link with an access network node (152, 154) in the wireless network (100) and furthermore
- at least at times identifies available access network nodes (152, 154) in the wireless network for the radio station system (110).

4. Radio station system according to one of claims 1 to 3,
**characterised in that**
at least the antennae assigned to the first and second radio stations (112, 114) are at a distance from each other and/or have different radiation characteristics.

5. Radio station system according to one of claims 1 to 4,
**characterised in that**
the housings of the first and second radio stations (112, 114) are at a distance from each other.

6. Radio station system according to one of claims 1 to 5,
**characterised in that**
the second radio station (114) is connected to the first radio station (112) via an Ethernet interface.

7. Means of transport, in particular a vehicle, with a radio station system (110) according to one of claims 1 to 6,
wherein in particular the first and second radio stations (112, 114) are arranged at different locations in the vehicle.

8. Method for operating a radio station system (110) according to one of claims 1 to 6, in which during the existence of the active radio link (130) between the first radio station (112) and the first access network node (152) the second radio station (114)
a.) at least at times identifies available access network nodes (152, 154) in the wireless network (100) for the radio station system (110),
b.) after or during method step a.) determines a preferred access network node (154) from the available access network nodes identified during method step a.) and sets up a standby radio link (132) with the preferred access network node (154), wherein the standby radio link (132) is set up in such a way that at least during the existence of the active radio link (130) between the first radio station (112) and the first access network node (152), no user data is exchanged via the standby radio link (132), and wherein the first radio station (112) is embodied corresponding to the second radio station (114),
c.) after method step b.) compares a quality of the active radio link (130) with a quality of the standby radio link (132),
d.) after method step b.) or c.) selects a preferred radio link from the active radio link (130) and the standby radio link (132).

9. Method according to claim 8,
**characterised in that**
after method step c.) or d.)
e.) the second radio station (114) converts the standby radio link (132) into a further active radio link for the transmission of the user data to the preferred access network node (154) and
the first radio station (112) terminates the active radio link to the first access network node (152) and/or converts it into a further standby radio link, if
- the quality of the standby radio link (132) exceeds or has exceeded the quality of the active radio link (130), and/or
- the preferred radio link corresponds to the standby radio link (132).

10. Method according to claim 9,
**characterised in that**
after or during step e.)
f.) the first radio station (112) at least at times identifies available access network nodes (152, 154) in the wireless network (100) for the radio station system (110).

## Revendications

1. Système (110) de station radio pour un réseau sans fil comprenant au moins deux noeuds (152, 154) de réseau d'accès,
dans lequel un premier des au moins deux noeuds (152) de réseau d'accès est associé dans le réseau (100) sans fil au système (110) de station radio en tant que noeud de réseau d'accès et le système (110) de station radio est relié au premier noeud (152) de réseau d'accès par une liaison (130) radio active pour la transmission de données utiles et
dans lequel le système (110) de station radio comprend une première station (110) radio qui, pour l'échange des données utiles, est reliée au premier noeud (152) de réseau d'accès par la liaison (130) radio active et dans lequel le système (110) de station radio comprend une deuxième station (114) radio et
dans lequel la deuxième station (114) radio est constituée pour la détermination d'un noeud (154) de réseau d'accès préféré parmi les noeuds de réseau d'accès disponibles déterminés et pour l'établissement d'une liaison (132) de secours avec le noeud (154) de réseau d'accès préféré, la liaison (132) radio de secours étant telle qu'au moins pendant la durée de la liaison (130) radio active entre la première station (112) radio et le premier noeud (152) de réseau d'accès par la liaison (132) radio de secours, seul des données de contrôle de communication radio sont échangées et des noeuds (152, 154) de réseau d'accès disponibles au moins de temps en temps pour le système (110) de station radio sont déterminés dans le réseau (100) sans fil, **caractérisé en ce que**
- la deuxième station (114) radio est reliée à la première station (112) radio par une interface (116), 118) de communication,
- la deuxième station (114) radio a des moyens de comparaison d'une qualité de la liaison (130) radio active à une qualité de la liaison (132) radio de secours.
- la première station (112) radio est constituée de manière correspondante à la deuxième station (114) radio,
- la première station (112) radio et la deuxième station (114) radio ont chacune un boîtier.

2. Système de station radio suivant la revendication 1,
**caractérisé**
**en ce que** le système de station radio est constitué et est agencé de manière à ce que la liaison (132) radio de secours soit transformée en une autre liaison radio active pour la transmission des données utiles de la deuxième station (114) radio au noeud (154) de réseau d'accès préféré et il est mis fin à la liaison (130) radio active entre la première station (112) radio et le premier noeud (132) de réseau d'accès et/ou elle est transformée en une autre liaison radio de secours si la qualité de la liaison (132) radio de secours dépasse ou a dépassé la qualité de la liaison (130) active et/ou la liaison radio préférée correspond à la liaison (132) radio de secours.

3. Système de station radio suivant la revendication 2,
**caractérisé**
**en ce que** la première station (112) radio ? après la fin de la liaison (130) radio active et/ou la transformation de la liaison (130) radio active en l'autre liaison radio de secours vers le premier noeud (152) de réseau d'accès, n'envoi plus ou n'échange plus des données utiles avec un noeud 152, 154) de réseau d'accès dans le réseau (100) sans fil et en outre au moins de temps en temps détermine dans le réseau sans fil des noeuds (152, 154) de réseau d'accès disponibles pour le système (110) de station radio.

4. Système de station radio suivant l'une des revendications 1 à 3,
**caractérisé**
**en ce qu'**au moins des antennes associées à la première et à la deuxième stations (112, 114) radio sont à distance et/ou ont une caractéristique de rayonnement différente.

5. Système de station radio suivant l'une des revendications 1 à 4,
caractérisé
les boîtiers de la première et de la deuxième stations (112, 114) radio sont à distance.

6. Système de station radio suivant l'une des revendications 1 à 5,
**caractérisé**
**en ce que** la deuxième station (114) radio est reliée à la première station (112) radio par une interface Ethernet.

7. Moyen de déplacement, notamment véhicule, comprenant un système (110) de station radio suivant l'une des revendications 1 à 6, dans lequel notamment la première et la deuxième stations (112, 114) radio sont mises sur le véhicule en des emplacements différents.

8. Procédé pour faire fonctionner un système (110) de station radio suivant l'une des revendications 1 à 6, dans lequel la deuxième station (114) radio détermine, pendant la durée de la liaison (130) radio active entre la première station (112) radio et le premier noeud (152) de réseau d'accès,
a.) au moins de temps en temps dans le réseau (100) sans fil des noeuds (152, 154) de réseau d'accès disponibles pour le système (110) de station radio,
b.) détermine, après ou pendant le stade a.) du procédé, un noeud (154) de réseau d'accès préféré parmi les noeuds de réseau d'accès disponibles déterminés pendant le stade a.) du procédé et établit une liaison (132) de secours avec le noeud (154) de réseau d'accès préféré, la liaison (132) radio de secours étant telle qu'au moins pendant la durée de la liaison (130) radio active entre la première station (112) radio et le premier noeud (152) de réseau d'accès par la liaison (132) radio de secours, des données utiles ne sont pas échangées et dans lequel la première station (112) radio est constituée de manière correspondante à la deuxième station (114) radio,
c.) compare, après le stade b.) du procédé, une qualité de la liaison (130) radio active à une qualité de la liaison (132) radio de secours,
d.) sélectionne, après le stade b.) ou c.) du procédé, une liaison radio préférée parmi la liaison (130) radio active et la liaison (132) radio de secours.

9. Procédé suivant la revendication 8,
**caractérisé**
**en ce qu'**après le stade c.) ou d.) du procédé :
e.) la deuxième station (114) radio transforme la liaison (132) radio de secours en une autre liaison active pour la transmission des données utiles au noeud (154) de réseau d'accès préféré et la première station (112) radio met fin à la liaison radio active vers le premier noeud (152) de réseau d'accès et/ou la transforme en une autre liaison radio de secours si la qualité de la liaison (132) radio de secours dépasse ou a dépassé la qualité de la liaison (130) active et/ou la liaison radio préférée correspond à la liaison (132) radio de secours.

10. Procédé suivant la revendication 9,
**caractérisé**
**en ce qu'**après ou pendant le stade e.) f.) la première station (112) radio détermine au moins de temps en temps dans le réseau (100) sans fil des noeuds (152, 154) de réseau d'accès disponibles pour le système (110) de station radio.
